# EUROPEAN PATENT APPLICATION

(11) **EP 1 496 086 A1**
(43) Date of publication of application: **12.01.2005**
(21) Application number: 03712772.7
(22) Date of filing: 19.03.2003
(51) Int. Cl.: C08L 101/00, C08K 3/40, C08J 5/00, A01N 59/16, C09D 7/12, C09D 5/14, C09D 201/00

(54) **ANTIBACTERIAL GLASS COMPOSITION, ANTIBACTERIAL RESIN COMPOSITION AND PROCESS FOR PRODUCING THE SAME**

(30) Priority: 05.04.2002 JP 2002103411
(71) Applicant: KANEBO, LTD., Tokyo 131-0031 (JP); Kanebo Chemical Industries, Ltd., Osaka-shi, Osaka 530-0001 (JP)
(72) Inventor: MATSUI, Masahiro, Nishinomiya-shi, Hyogo 662-0027 (JP)
(74) Representative: Reinhard - Skuhra - Weise & Partner GbR
(86) International application number: PCT/JP2003/003376
(87) International publication number: WO 2003/085051

(57) **Abstract**

An object of the present invention is to provide an antibacterial glass composition and an antibacterial resin composition which are less likely to cause secondary aggregation during molding or other processes. The antibacterial glass composition comprises an antibacterial glass and an inorganic dispersible filler. The antibacterial resin composition comprises an antibacterial glass, an inorganic dispersible filler and a resin. Also the present invention provides a method for producing an antibacterial resin composition, comprising mixing an antibacterial glass composition with a resin together and molding the mixture, said method being characterized by the addition of an inorganic dispersible filler.

## Description

### TECHNICAL FIELD

The present invention relates to an antibacterial glass composition and an antibacterial resin composition which are less likely to cause secondary aggregation during molding or other processes.

### BACKGROUND OF THE INVENTION

Due to enhanced cleanliness-oriented tendency of consumers and needs of consumers who pursue high value-added products, textile products with a microorganism control function of suppressing or sterilizing noxious microorganisms propagating in a wearing state, that is, antibacterial textile products subjected to so-called antibacterial and deodorant processing have recently spread, and also various processing methods capable of imparting antibacterial properties to textile products have been developed and put into practical use.

For example, fibers are impregnated with antibacterial compounds such as quaternary ammonium salt and diphenyl ether-based compound. However, these compounds are organic antibacterial agents and therefore cause a problem that they exhibit poor safety to human body and antibacterial activity is lowered by heat or cleaning.

Inorganic antibacterial agents include, for example, those obtained by supporting antibacterial metals such as silver, copper and zinc on crystalline aluminosilicate, amorphous aluminosilicate, silica gel, activated alumina, diatomaceous earth, activated carbon, zirconium phosphate, hydroxyapatite, magnesium oxide, magnesium perchlorate and glass. There are also exemplified those obtained by mixing these inorganic antibacterial agents with polymer compounds such as polyester, nylon, acryl and acetate and fiberizing the mixture. Antibacterial activity of these fiberized mixtures is not lowered by cleaning.

These inorganic antibacterial agents are marketed in the form of a master batch or a compound for convenience of use. That is, the master batch refers to pellets containing a high concentration of the inorganic antibacterial agent added therein and is obtained by adding a high concentration (for example, the concentration of the antibacterial agent is 20%) of the inorganic antibacterial agent to a resin. Before use, the inorganic antibacterial agent can be diluted to a predetermined concentration of a final product by melt-mixing the pelletized resin containing the inorganic antibacterial agent and a separately prepared resin. The compound refers to pellets which can be used without being diluted when a final product is prepared because additives such as inorganic antibacterial agent, resin and pigment are previously mixed so as to adjust the concentration of the final product.

In case an antibacterial glass is used in fibers, an average particle size of the antibacterial glass is adjusted within a range from 0.1 to 50 µm by a dry method using a conventionally known grinder, or a wet method using water or solvent, in view of applicability to various processings. The antibacterial glass obtained by these methods has irregular shape and also has high surface energy because crystal or molecular bondings are cleaved at the fractured surface.

Therefore, in case the master batch or compound is prepared by adding only the antibacterial glass to the resin, the antibacterial glass in the resulting antibacterial resin composition is relieved from secondary aggregation with difficulty because of the surface energy even if they are mixed under stirring in a mixer for a long time and the mixture is charged in an extruder. In case of falling the resulting antibacterial resin composition into the extruder from a hopper, unevenness in feeding occurs when a large amount of secondary aggregated antibacterial glass falls first.

Therefore, in case the antibacterial glass causes secondary aggregation and is not uniformly dispersed and mixed in a state of the master batch or compound, the antibacterial glass is not relieved from secondary aggregation and is not uniformly dispersed upon ejection through a spinning machine even when melted and mixed by a screw of the spinning machine. For example, a filter mounted in the spinning machine in the fiber manufacturing process is plugged with the inorganic antibacterial agent in a short time, thereby to cause an increase in filtration pressure and thread breakage, and thus it is made impossible to perform spinning.

Therefore, in case a high-concentration master batch or compound is prepared by using the antibacterial glass, the antibacterial glass and the resin are uniformly mixed by a tumbler or a Henschel mixer for a given time, previously, and then the mixture of raw materials is charged in a twin-screw extruder to form pellets.

Although the antibacterial glass is easily dispersed by using this twin-screw extruder, forcible dispersion due to the twin-screw extruder exerts an adverse influence on a polyester or a nylon resin. For example, a polyester resin has a problem that, even if the antibacterial glass can be uniformly dispersed, it becomes impossible to produce fibers because of severe draw-down (decrease in viscosity) of the resin containing the antibacterial glass upon spinning.

The present invention has been made so as to solve the problems described above and an object thereof is to provide an antibacterial glass composition and an antibacterial resin composition which are less likely to cause secondary aggregation during molding or other processes.

### DISCLOSURE OF THE INVENTION

To achieve the above object, a first gist of the present invention is an antibacterial glass composition comprising an antibacterial glass and an inorganic dispersible filler, a second gist of the present invention is an antibacterial resin composition comprising an antibacterial glass, an inorganic dispersible filler and a resin, and a third gist of the present invention is a method for producing an antibacterial resin composition, comprising mixing an antibacterial glass composition with a resin and molding the mixture, said method being characterized by the addition of an inorganic dispersible filler.

### BEST MODE FOR CARRYING OUT THE INVENTION

Examples of the antibacterial glass used in the present invention include those obtained by supporting an antibacterial metal on glass as one of inorganic carriers.

The antibacterial metal described above is not specifically limited as long as it can be kneaded into sheets, films, molded articles or textile products. At least one metal ion selected from the group consisting of ions of metals such as silver, copper and zinc is preferred because discoloration does not occur when ions are kneaded into textile products and the resulting textile products are excellent in water resistance, detergent resistance, acid resistance and alkali resistance, and also the antibacterial properties-sustaining effect is less likely to be lowered.

Examples of the glass described above include element glass, hydrogen bond glass, oxide glass, silicate glass, silica glass, alkali silicate glass, soda-lime glass, lead (alkali) glass, barium glass, borosilicate glass, phosphate glass, borate glass, fluoride glass, chloride glass, sulfide glass, carbonate glass, nitrate glass, sulfate glass, soluble glass and crystallized glass.

Examples of the method of supporting the antibacterial metal on glass include, but are not limited to, melting method, CDC method, sol-gel method, ion exchange method for doping a glass body with the antibacterial metal, and ion implantation method.

The average particle size of the antibacterial glass is not specifically limited and is preferably from 0.05 to 50 µm in view of applicability to various processings, and more preferably from 0.1 to 10 µm. To exhibit antibacterial properties, the antibacterial metal is preferably contained in the amount of 0.01 parts by weight or more, more preferably 0.01 to 50 parts by weight, based on 100 parts by weight of glass, and is preferably added in the amount of 0.1 parts by weight or more, more preferably 0.1 to 15 parts by weight, based on 100 parts by weight of the antibacterial resin composition.

Examples of the inorganic dispersible filler used in the present invention include barium, silica, zeolite, kaolin, talc and zinc oxide. Among these inorganic dispersible fillers, preferred are those which do not exert an adverse influence such as discoloration or reduction in strength as a result of the reaction and are insoluble in acid, alkali and solvent, and are less likely to react with them. Also preferred are those having no hygroscopicity which do not cause problems when a master batch or a compound is prepared, and barium or a salt thereof is particularly preferable.

Examples of barium and a salt thereof described above include barium chloride, barium nitrate, barium sulfate, barium carbonate, barium hydroxide, barium peroxide and barium fluoride. Among these compounds, barium sulfate is particularly preferable.

The average particle size of the inorganic dispersible filler is not specifically limited and is preferably from 0.1 to 8 µm in view of applicability to various processings, and more preferably from 0.8 to 1.8 µm. The inorganic dispersible filler having the average particle size of 0.8 to 1.8 µm gets into the space between primary particles of the antibacterial glass, and thus it is made possible to suppress adhesion between the primary particles of the antibacterial glass.

The inorganic dispersible filler is preferably added in the amount of 3 to 20 parts by weight based on 100 parts by weight of the antibacterial glass.

The antibacterial glass and the inorganic dispersible filler are uniformly mixed by a mixer such as Henschel mixer, ribbon blender, ball mill, stirrer mill and V-shaped mixer. An antibacterial glass composition is obtained by dispersing and mixing for a given time using the mixer.

The resulting antibacterial glass composition is further mixed with a resin using an extruder or a Despa to obtain an antibacterial resin composition.

The resin used in the present invention may be any of natural resin, semisynthetic resin and synthetic resin, or may be any of thermoplastic resin, thermosetting resin, rubber, inorganic fiber reinforced thermoplastic resin and inorganic fiber reinforced thermosetting resin.

Examples of the thermoplastic resin described above include polyvinyl chloride, polyethylene, polypropylene, ABS resin, AS resin, polystyrene, polyester, polyvinylidene chloride, polyamide, PBT, saturated polyester resin, polyacetal, polyvinyl alcohol, polycarbonate, urethane resin, acrylic resin, fluororesin and EVA resin. Examples of the thermosetting resin described above include silicone resin, modified silicone resin, unsaturated polyester resin, vinyl ester resin, phenol resin, melamine resin, urea resin and epoxy resin. Examples of the rubber include natural rubber and synthetic rubber.

Examples of the inorganic fiber reinforced thermoplastic resin described above include fiber reinforced polyvinyl chloride, fiber reinforced polyethylene, fiber reinforced polypropylene, fiber reinforced ABS resin, fiber reinforced polyamide, fiber reinforced polystyrene, fiber reinforced PBT, fiber reinforced polyacetal, fiber reinforced AS resin, fiber reinforced nylon, fiber reinforced polyester, fiber reinforced polyvinylidene chloride, fiber reinforced polycarbonate, fiber reinforced acrylic resin, fiber reinforced fluororesin and fiber reinforced polyurethane resin. Examples of the inorganic fiber reinforced thermosetting resin described above include fiber reinforced phenol resin, fiber reinforced urea resin, fiber reinforced melamine resin, fiber reinforced unsaturated polyester resin, fiber reinforced vinyl ester, fiber reinforced epoxy resin and fiber reinforced urethane resin.

Regarding a ratio of the antibacterial glass to the resin, 100 parts by weight of the resin is preferably mixed with a high concentration, for example, 0.01 to 100 parts by weight of the antibacterial glass to obtain a master batch or a compound, taking account of cost and antibacterial properties.

The master batch or the compound is prepared by using a single- or twin-screw extruder having a cylinder diameter of 30 to 120 mmφ. After setting the extruding temperature to 170 to 300°C, the antibacterial glass, the inorganic dispersible filler and the resin are charged and then melt-mixed for a suitable time. The melt-mixing temperature must be suitably selected according to the kind and amount of the resin and these materials may be heated at a given heating rate. Then, the resulting mixture is passed through a cooling bath and then cut into pellets.

The antibacterial resin composition can be used in the form of textile products, sheets, films, molded articles and coating compositions. In case of coating compositions, an antibacterial master paste is used. For example, the antibacterial master paste can be prepared by adding a silicone-based dispersant and a solvent such as ethanol to an antibacterial resin composition and mixing them using a Despa or a three-roll mill for 5 to 120 minutes until a liquid state is achieved.

The present invention will now be described in more detail by way of examples.

### (Examples 1 to 9 and Comparative Example 1)

As shown in Table 1, 80 parts by weight of a polyester resin was mixed with 18 parts by weight of an antibacterial glass (containing 0.5 parts by weight of an antibacterial metal based on 100 parts by weight of glass, average particle size: 2 µm) and 2 parts of various inorganic dispersants (an inorganic dispersant is not used and 20 parts by weight of an antibacterial glass is used in Comparative Example 1) and the mixture was extruded by a twin-screw extruder to obtain an antibacterial master batch. As shown in Table 2, 80 parts by weight of a polyester resin was mixed with 18 parts by weight of the same antibacterial glass as in Example 1 and 2 parts of various barium sulfates each having a different average particle size and the mixture was extruded by a twin-screw extruder to obtain an antibacterial master batch. Using the resulting master batch, a filtration pressure was measured.

10 Parts by weight of the antibacterial master batch was mixed with 90 parts by weight of a polyester resin so that the concentration of the antibacterial glass is adjusted to 2 parts by weight (mixture of various inorganic dispersible fillers and an antibacterial glass), and then the mixture was spun using a prototype machine to obtain fiber samples for evaluation of antibacterial properties and discoloration.

These samples were evaluated by the following methods. Formulations and evaluation results are shown in Tables 1 and 2.

### [Evaluation of antibacterial properties]

### I. Method for measurement of initial antibacterial and deodorant effect

(1) Testing method: Unified testing method (JIS L 1902-98)
(2) Test bacteria: Staphylococcus aureus
(3) Antibacterial and deodorant standards: Bacteriostatic activity value (log B - log C) ≥ 2.2
(4) Test results:

The symbol "B" denotes that bacteriostatic activity value (log B - log C) ≥ 2.2.

The symbol "E" denotes that bacteriostatic activity value (log B - log C) is less than 2.2.

### II. Method for measurement of durability of antibacterial and deodorant effect

(1) Cleaning method: JIS L 0217 No. 103, using JAFET standard detergent
(2) Number of cleaning: 50 times
(3) Testing method: Unified testing method (JIS L 1902-98)
(4) Test bacteria: Staphylococcus aureus
(5) Antibacterial and deodorant standards: Bacteriostatic activity value (log B - log C) ≥ 2.2
(6) Test results:

The symbol "B" denotes that bacteriostatic activity value (log B - log C) ≥ 2.2.

The symbol "E" denotes that bacteriostatic activity value (log B - log C) is less than 2.2.

### [Evaluation of discoloration]

I. Initial: Color difference in color hue between samples containing no antibacterial agent and samples immediately after spinning is measured by a color-difference meter.
II. After treatment: Samples containing no antibacterial agent and samples immediately after spinning are subjected to weight reduction by alkali and cleaned 50 times using a JAFET standard detergent, and then the color difference is measured by a color-difference meter.

### Test results:

The symbol "B" denotes that ΔE is less than 1.

The symbol "C" denotes that ΔE is from 1 to 1.2.

The symbol "E" denotes that ΔE is not less than 1.2.

### [Evaluation of filtration pressure of antibacterial resin composition]

To evaluate the degree of aggregation of an antibacterial resin composition, a filtration pressure test was carried out. After mounting a filter (40 µm) to the tip portion of an extruder, suitably diluted antibacterial master batch is charged, and then melted and ejected at 170 to 300°C. An increase in filtration pressure of the resin is measured with a lapse of time.

In case the antibacterial resin composition is aggregated, the filter is plugged in an early stage and the filtration pressure begins to increase, and finally the filter is punctured. In case the antibacterial resin composition is not aggregated, an increase in filtration pressure does not occur for a long time. This shows that the antibacterial resin composition can be spun for a long time.

The results (Δ (min) = kpa) are shown in the table.

### Test results:

The symbol "A" denotes that Δ40 is from 0 to 4 (possible to continuously produce fibers for 20 or more days).

The symbol "B" denotes that Δ40 is from 5 to 9 (possible to continuously produce fibers for about 10 days).

The symbol "C" denotes that Δ40 is from 10 to 19 (possible to continuously produce fibers for about 5 days).

The symbol "D" denotes that Δ40 is from 20 to 39 (possible to continuously produce fibers for about 1 day).

The symbol "E" denotes that Δ40 is 40 or more (impossible to continuously produce fibers).

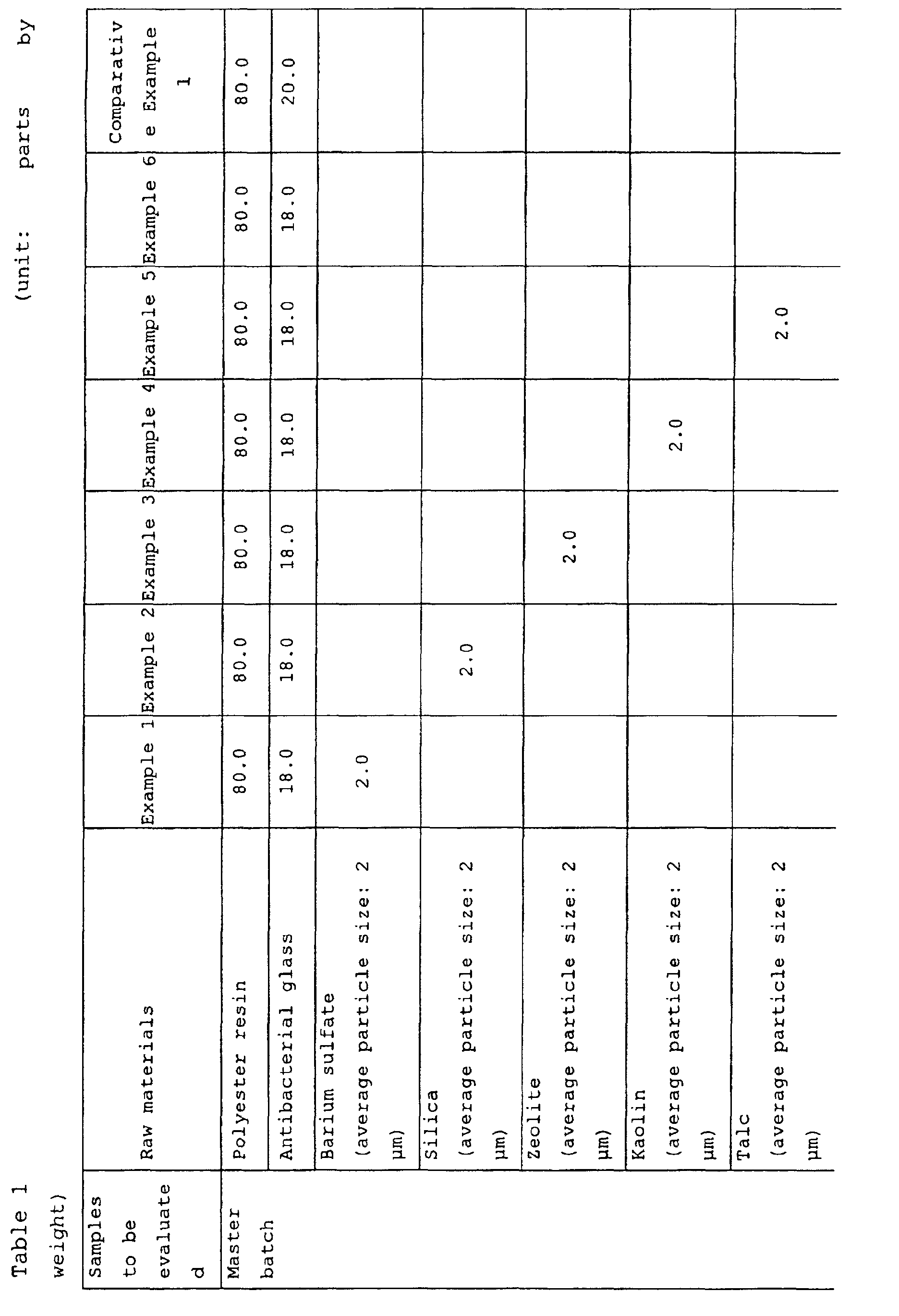

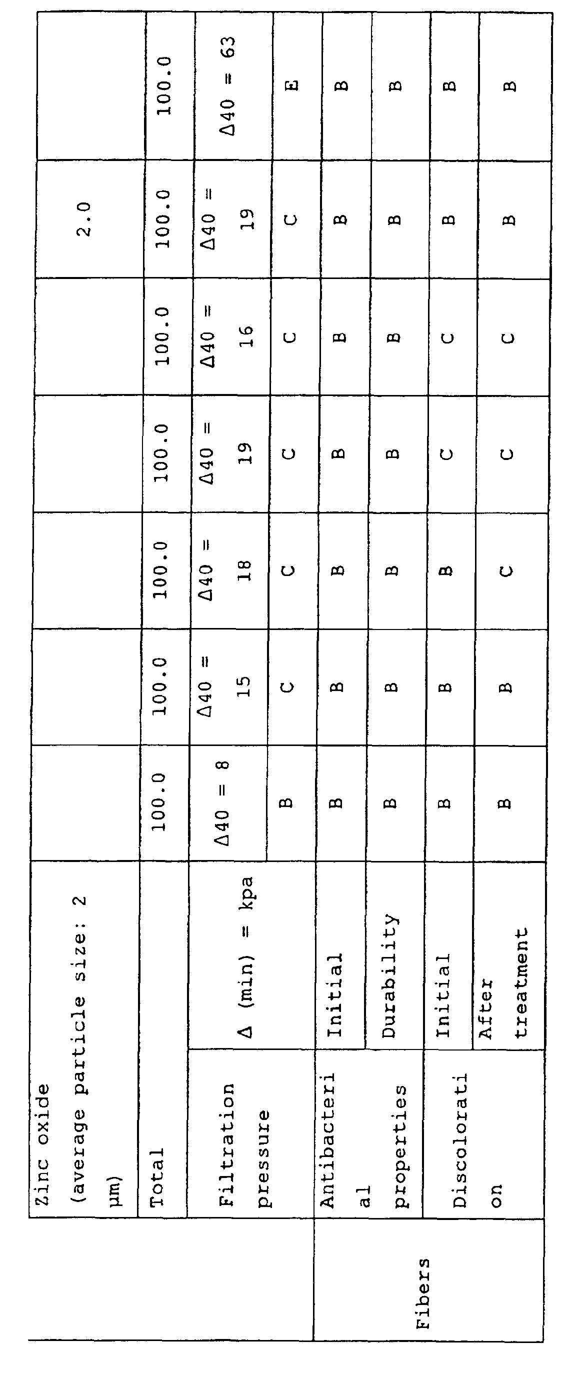

As is apparent from the evaluation results shown in Table 1, when using various inorganic dispersible fillers, the filtration pressure increases very little and the resulting fibers are excellent in antibacterial properties and discoloration.

**Table 2**

| (unit: parts by weight) | | | | | |
|---|---|---|---|---|---|
| Samples to be evaluated | Raw materials | | Example 7 | Example 8 | Example 9 |
| Master batch | Polyester resin | | 80.0 | 80.0 | 80.0 |
| | Antibacterial glass | | 18.0 | 18.0 | 18.0 |
| | Barium sulfate (average particle size: 1 µm) | | 2.0 | | |
| | Barium sulfate (average particle size: 0.05 µm) | | | 2.0 | |
| | Barium sulfate (average particle size: 10 µm) | | | | 2.0 |
| | Total | | 100.0 | 100.0 | 100.0 |
| | Filtration pressure | Δ (min) = kpa | Δ40 = 0 | Δ40 = 12 | Δ40 = 19 |
| | | | A | C | C |
| Fibers | Antibacterial properties | Initial | B | B | B |
| | | Durability | B | B | B |
| | Discoloration | Initial | B | B | B |
| | | After treatment | B | B | B |

As is apparent from the evaluation results shown in Table 2, the filtration pressure increases very little when using barium sulfate having an average particle size of 1 µm, while the filtration pressure slightly increases when using barium sulfate having an average particle size of 0.05 or 10 µm.

### (Example 10)

The same antibacterial glass as in Example 1 was mixed with the same barium sulfate as in Example 1 to obtain antibacterial glass compositions each containing 70, 75, 80, 85, 90, 95 or 98 parts by weight of the antibacterial glass. Furthermore, these antibacterial glass compositions were mixed with a polyester resin to obtain antibacterial resin compositions each containing 0.1, 0.5, 0.7, 1.0, 1.5, 3.0, 6.0, 8.0, 8.5, 9.0, 9.5, 9.8, 10.0, 15.0, 20.0, 30.0 or 40.0 parts by weight of the antibacterial glass composition. In the same manner, except that barium chloride or barium fluoride having an average particle size of 2.0 µm was used in place of barium sulfate, antibacterial resin compositions were prepared.

### (Example 11)

18 Parts by weight of the same antibacterial glass as in Example 1, 2 parts by weight of various inorganic dispersants shown in Table 1, and polyester and polypropylene resins (80 parts by weight in total) were mixed to obtain an antibacterial master batch. The resulting master batch was mixed with polyester and polypropylene resins and melted under the conditions of heating from 180 to 220°C, and then the melt mixture was extruded by a T-die extruder to obtain each antibacterial transparent film having a thickness of 100 µm and each antibacterial transparent sheet having a thickness of 1000 µm.

### (Example 12)

18 Parts by weight of the same antibacterial glass as in Example 1, 2 parts by weight of various inorganic dispersants shown in Table 1, and polystyrene and polycarbonate resins (80 parts by weight in total) were mixed to obtain an antibacterial master batch. The resulting master batch was melt-mixed with a polystyrene resin under the conditions of heating from 200 to 240°C or melt-mixed with a polycarbonate resin under the conditions of heating from 170 to 300°C, and then the melt mixture was extruded by an injection extruder to obtain each antibacterial transparent plate having a thickness of 3 mm.

### (Example 13)

18 Parts by weight of the same antibacterial glass as in Example 1, 2 parts by weight of various inorganic dispersants shown in Table 1 and 80 parts by weight of a silicone-based dispersant were mixed and agitated by a Despa for 5 minutes to obtain an antibacterial master paste. The resulting master paste was mixed with a transparent acrylic resin coating composition to obtain an antibacterial coating composition. The resulting coating composition was applied on a plate in a coating thickness of 20 µm.

Using test samples of Examples 10 to 13 wherein the weight of the antibacterial glass is 2.0 parts by weight, antibacterial properties were confirmed by a film adhesion method defined in JIS Z 2801. Using a stereo microscope, dispersibility of the antibacterial agent (mixture of various inorganic dispersible fillers and an antibacterial agent) was confirmed and also the presence or absence of aggregates was confirmed. The test samples of Examples 10 to 13 were excellent in dispersibility and exerted sufficient antibacterial effect.

### Industrial Applicability

Since the antibacterial glass composition and the antibacterial resin composition of the present invention are less likely to cause secondary aggregation during molding or other processes, antibacterial master batches or compounds, antibacterial fibers, sheets, films, molded articles and coating compositions can be produced in a stable manner by kneading with them. Therefore, the antibacterial glass composition and the antibacterial resin composition of the present invention are industrially useful.

## Claims

1. An antibacterial glass composition comprising an antibacterial glass and an inorganic dispersible filler.

2. The antibacterial glass composition according to claim 1, wherein the inorganic dispersible filler has an average particle size of 0.1 to 8 µm.

3. The antibacterial glass composition according to claim 1 or 2, wherein the inorganic dispersible filler is barium or a salt thereof.

4. An antibacterial resin composition comprising the antibacterial glass composition of any one of claims 1 to 3 and a resin.

5. The antibacterial resin composition according to claim 4, which is in the form of pellets or paste.

6. The antibacterial resin composition according to claim 4, which is in the form of a textile product, a sheet, a film, a molded article or a coating composition.

7. A method for producing an antibacterial resin composition, comprising mixing an antibacterial glass composition with a resin and molding the mixture, said method being **characterized by** the addition of an inorganic dispersible filler.
